## Europäisches Patentamt
## European Patent Office
## Office européen des brevets

(19)

(11) Veröffentlichungsnummer: **0 001 784**
**B1**

(12) **EUROPÄISCHE PATENTSCHRIFT**

(45) Veröffentlichungstag der Patentschrift: 15.04.81

(51) Int. Cl.³: **B 29 F 3/02, B 29 H 1/10**

(21) Anmeldenummer: 78101171.3

(22) Anmeldetag: 18.10.78

(54) Vorrichtung zur Verarbeitung inhomogener Kautschukmischungen.

(30) Priorität: 29.10.77 DE 2748717

(43) Veröffentlichungstag der Anmeldung:
16.05.79 Patentblatt 79/10

(45) Bekanntmachung des Hinweises auf die Patenterteilung:
15.04.81 Patentblatt 81/15

(84) Benannte Vertragsstaaten:
BE DE FR GB NL

(56) Entgegenhaltungen:
CH - A - 305 212
DE - B - 1 091 841
DE - A - 1 529 826
US - A - 2 496 625
US - A - 3 897 937

(73) Patentinhaber: **BAYER AG**
**Zentralbereich Patente, Marken und Lizenzen**
**D-5090 Leverkusen 1, Bayerwerk (DE)**

(72) Erfinder: **Lehnen, Josef, Dr.**
**Domblick 14**
**D-5090 Leverkusen 31 (DE)**
Erfinder: **Zingelmann, Gerd**
**Duesseldorfer Strasse 33**
**D-5090 Leverkusen 3 (DE)**

Courier Press, Leamington Spa, England.

## Vorrichtung zur Verarbeitung inhomogener Kautschukmischungen

An die Qualität technischer Gummiwaren werden immer höhere Anforderungen gestellt. Gleichzeitig müssen aus wirtschaftlichen Gründen die Zykluszeiten bei der Verarbeitung von Kautschukmischungen durch Spritzguß verkürzt bzw. der Ausstoß bei der Verarbeitung durch Extrusion erhöht werden.

Es ist auch versucht worden, die Herstellung technischer Gummiwaren dadurch einfacher, billiger und energiesparender zu gestalten, indem man anstatt vollständig homogener Kautschukmischungen pulverförmige Kautschukfertigmischungen in Streifen- oder Granulatform einsetzt.

Kautschukmischungen enthalten den unvulkanisierten Kautschuk und sämtliche Zuschlagstoffe wie Füllstoffe (Ruß, Silicate), Weichmacheröle, Vulkanisiermittel (Vernetzer), Zusätze (Alterungsschutzmittel, Ozonschutzmittel, Stabilisatoren), und Verarbeitungshilfsmittel. Die Herstellung solcher Mischungen erfordert intensives Vermischen der meist sehr zähen Bestandteile unter hohem Energieaufwand in Innenmischern oder auf Walzwerken. Pulverförmige Kautschukfertigmischungen können einfach hergestellt werden, denn ausgehend vom pulverförmigen Kautschuk sind nur noch pulverförmige Bestandteile mit Weichmacherölen zu mischen, wofür allerdings speziell entwickelte Mischaggregate erforderlich sind.

Die pulverförmigen Kautschukfertigmischungen werden üblicherweise vor ihrer Verarbeitung durch Extrusion oder Spritzguß kompaktiert und homogenisiert. Man kann dies in eigens hierfür entwickelten Vorrichtungen erreichen.

Gegenstand der Erfindung sind nun Extrusionsschnecken für die Kautschukverarbeitung, die zusätzlich zu ihrer normalen Förder- und Kompaktierwirkung noch mischen, eine Scherwirkung ausüben und homogenisieren. Diese Schnecken sind geeignet, pulverförmige Kautschukfertigmischungen direkt zu verarbeiten, d.h., ohne Zwischenkompaktierung.

Die Erfindung betrifft demnach eine Misch- und Knetvorrichtung in Form einer Extruderschnecke zur Verarbeitung inhomogener Mischungen mit einem Mischteil und einem Knetteil mit inkonstanter Tiefe der Schneckengänge, dadurch gekennzeichnet, daß für die Verarbeitung inhomogener Kautschuk-Mischungen die Tiefe der Schneckengänge von fast 0 kontinuierlich langsam ansteigt und rasch wieder auf fast 0 abfällt, so daß sich eine "Kammer" bildet, in der das Füllgut in Rotation versetzt wird.

Die DE—B—1 091 841 beschreibt eine Misch- und Knetvorrichtung, die ebenfalls die Form einer Extrusionsschnecke besitzt. Nur in einem Teil der Schneckenwelle ist eine Anordnung getroffen, die als Reibwalze bezeichnet ist. Doch sind keine Schneckengänge vorhanden, die Schneckenwelle ist dicker und so gestaltet, daß zwischen ihr und der Innenwand des Gehäuses keilförmige Räume entstehen. Die Anordnung übt eine Reib- und Mahlwirkung aus, ist aber zur Kompaktierung einer Kautschukmischung nicht verwendbar.

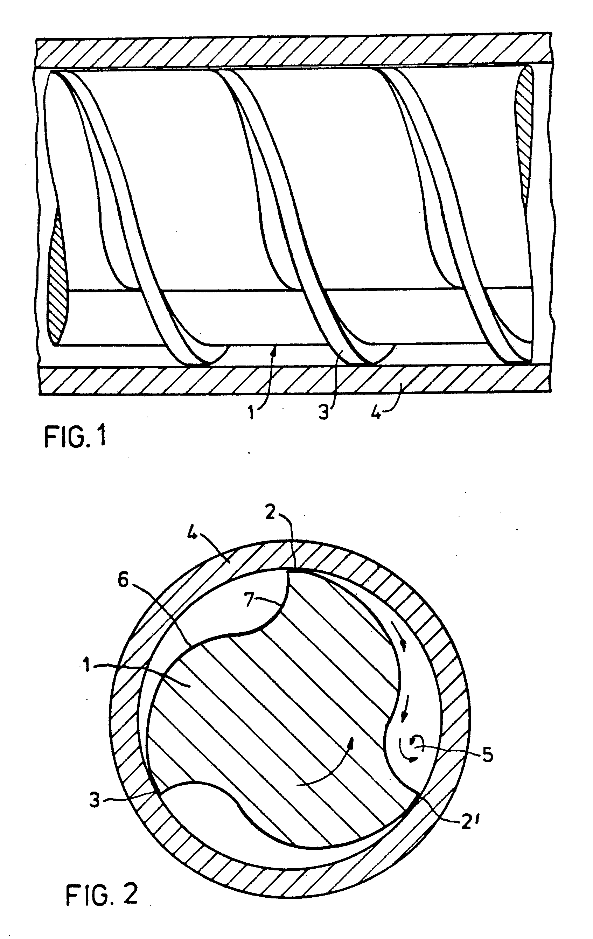

Das Prinzip der Extruderschnecke gemäß Erfindung zeigen die Figuren (1) (schematische Ansicht) und (2) (Schnitt von links). Das Gehäuse der Schneckenmaschine wird durch (4) dargestellt; (3) zeigt den möglichst dicht an die Gehäusewand heranreichenden Schneckensteg. (1) zeigt den Körper der Schnecke. Beim Drehen in Pfeilrichtung (Fig. 2) fördert diese Schnecke teilweise ein pulverförmiges und teilweise ein plastisches, zähes Material. Im Zwischenraum zwischen zwei Schneckenstegen ist nun die Tiefe des Schneckenganges variabel. Bei (2) ist die Tiefe des Schneckenganges sehr klein, so daß ein schmaler Scherspalt entsteht. Dann wächst die Gangtiefe langsam kontinuierlich an, um kurz vor dem nächsten Scherspalt (2') schnell abzufallen, so daß vor dem Spalt eine scharfe Kante ensteht. In der Fig. (2) sind pro Schneckengang drei solcher "Kammern" vorgesehen. Dies hat sich am zweckmäßigsten erwiesen; es ist aber ebenfalls möglich, eine, zwei, oder mehrere Kammern vorzusehen.

Einem teils pulverförmigen, teils plastischen Material, das sich in der sich drehenden Schnecke befindet, wird zunächst ein Raum angeboten, in dem es durch die Drehung der Schnecke in Rotation versetzt wird (5). Die Verhältnisse sind ähnlich wie die in dem Wulst, der sich auf einem Walzwerk vor dem Spalt bildet. Danach muß das Material den Spalt (2') passieren, wobei es starken Scherkräften ausgesetzt wird. Im Beispiel der Figuren (1) und (2) wiederholt sich dieser Vorgang noch zweimal pro Schneckenumdrehung.

Die Schnecke braucht nicht über ihre ganze Länge, wie oben beschrieben, ausgebildet zu sein und ist es in der Regel auch nicht. Meist ist an ihrem Anfang ein Einzugsteil vorhanden, d.h., dieses und das umgebende Schneckengehäuse sind so gestaltet, daß die Aufnahme von pulverförmigem oder inhomogenem Streifenmaterial möglich wird. An das Einzugsteil schließt sich gewöhnlich ein Förderteil an, dann ein Mischteil, wie oben beschrieben. Danach können sich nochmals ein Förderteil, noch ein Mischteil, wie oben beschrieben, und schließlich ein druckaufbauender Austragsteil anschließen.

Die Steigung der Schneckenstege von dem Mischteil kann je nach Schneckendurchmesser variabel ausgelegt werden. Der Scherspalt zwischen Zylinderbüchse und Schneckengang kann 0,01 bis 10 mm und die Scherstegbreite 1,0 bis 20 mm betragen. Die Gangtiefe zwischen zwei Scherstegen verläuft von Scherspalt (2) in einer beliebigen konvexen Kurve (6) bis zum Umkehrpunkt und endet in einer beliebigen konkaven Kurve (7), die in der nächsten Scherstegkante ausläuft.

Mit einer typischen Extrusionsmischung, die stellvertretend für die Vielzahl der in der Gummi-Industrie eingesetzten Mischungen sein soll, wurden mit dem vorab beschriebenen Mischteil praxisbezogene Versuche durchgeführt. Die hierbei verwendete Schnecke mit Mischteil hatte einen Durchmesser von 90 mm, wobei die Schneckenlänge vorzugsweise 16—24 D betrug.

**Patentanspruch**

Misch- und Knetvorrichtung in Form einer Extruderschnecke zur Verarbeitung inhomogener Mischungen mit einem Mischteil und einem Knetteil mit inkonstanter Tiefe der Schnekkengänge, dadurch gekennzeichnet, daß für die Verarbeitung inhomogener Kautschuk-Mischungen die Tiefe der Schneckengänge von fast 0 kontinuierlich langsam ansteigt und rasch wieder auf fast 0 abfällt, so daß sich eine "Kammer" bildet, in der das Füllgut in Rotation versetzt wird.

**Claim**

A mixing and kneading apparatus in the form of an extruder screw for processing inhomogeneous mixtures, comprising a mixing section and a kneading section, the screw channels being inconstant in depth, characterised in that for processing inhomogeneous rubber mixtures the depth of the screw channels increases gradually and continuously from almost zero and suddenly decreases again to almost zero, so that a "chamber" is formed, in which the material being processed is set in rotation.

**Revendication**

Dispositif de mélange et de pétrissage pour le traitement de mélanges inhomogènes, avec une partie mélangeuse et une partie pétrisseuse et une profondeur non constante des spires de la vis, caractérisé en ce que, pour le traitement des mélanges de caoutchoucs inhomobènes, la profondeur des spires de la vis augmente lentement et continuellement d'une valeur voisine de zéro et retombe rapidement à cette valeur voisine de zéro, de sorte qu'il se forme une "chambre" dans laquelle le produit est mis en rotation.

FIG. 1

FIG. 2